# EUROPEAN PATENT SPECIFICATION

(11) **EP 3 806 979 B1**
(45) Date of publication and mention of the grant of the patent: **26.10.2022**
(21) Application number: 19734929.3
(22) Date of filing: 12.06.2019
(51) Int. Cl.: B01D 47/02, B01D 47/05, F24C 15/20

(54) **SELF-CLEANING VENTILATION UNIT**
SELBSTREINIGENDE LÜFTUNGSEINHEIT
UNITÉ DE VENTILATION AUTONETTOYANTE

(30) Priority: 13.06.2018 SE 1850722
(43) Date of publication of application: 21.04.2021
(73) Proprietor: Enjay AB, 213 76 Malmö (SE)
(72) Inventor: LEKEBERG, Hans, 241 37 Eslöv (SE); LEKEBERG, Nils, 244 66 Furulund (SE); WIRÉN, Jesper, 244 66 Furulund (SE)
(74) Representative: Basck Ltd
(86) International application number: PCT/SE2019/050556
(87) International publication number: WO 2019/240661

(56) References cited:
- DE-A1- 2 724 463
- DE-A1- 3 637 892
- DE-A1- 19 536 626
- FR-A1- 2 549 947
- GB-A- 1 492 604
- JP-A- 2006 038 362
- US-A- 1 736 408

## Description

### TECHNICAL FIELD

The present invention relates to a self-cleaning particulate separator unit, a ventilation system comprising such unit, and a method for self-cleaning of such unit.

### BACKGROUND

Ventilation systems are designed to exchange air and sometimes also to clean air from air borne pollutants. Ventilation system units arranged inside the system, such as for example filters, energy recycling equipment, dampers, or similar are exposed to different contaminating air borne particles when air flow through the ventilation system unit. Such particles might adhere to the internal surfaces of the ventilation system unit, which may cause several detrimental effects of the ventilation system.

A build-up of particles within the ventilation system may block the flow path of the exhaust air, resulting in an increased resistance for the air flow. The fans in the system will require more energy to extract sufficient air volumes, thus increasing the energy bill.

If the system is not frequently cleaned, there is also a risk of a build-up of contaminating particles, which, as a first detrimental effect, might affect the functionality of the components of the ventilation system, and, as a second detrimental effect, might eventually clog the ventilation system completely. If this happens, air flow cannot be maintained at a preferred level, resulting in a seriously deteriorated functionality of the ventilation system components.

Environments where exhaust air is warm, moist and contaminated by particles of grease, soot, grime or dust, are extra hostile for ventilation systems. Examples of such environment can for instance be found in restaurants, bakeries or other large scale kitchen surroundings. The above mentioned particles will, very quickly, clog up traditional ventilation systems.

The ventilation industry has therefore during many years tested different filtration technologies designed specifically to extract and/or remove grease and soot. However, no current air cleaning technology has been able to remove enough of the grease and other detrimental particles effectively.

If the air cannot pass through the system, the exhaust air flow cannot be maintained, and the indoor air quality is seriously deteriorated.

There are numerous patents pertaining to traditional approaches of trying to create a robust solution specifically for aiding the ventilation system to remove contaminants and to stay clean. Known prior art is for instance described in DE 3 610 902 and US 4 099 941. An object is therefore to manage the air borne particles that would clog up the traditional ventilation systems without need for pre-filtration of the exhaust air and no additional cleaning member as described in for example DE 3 610 902.

Further background art is reflected in EP 2 149 756 B1. Herein is described a method for heat recovery from an exhaust hood, using a heat exchanger. Cooking effluent may also pass through a water spray to cool the exhaust. Over time, the heat exchanger becomes clogged by grease in the exhaust air. The solution presented in this publication is to reverse the heat pump in order to melt grease that has become stuck on heat transfer surfaces of the heat exchanger. The heat exchanger may also be cleaned with a spray or a layer of ice can be formed on the surfaces of the heat extractor to act as a shield and protect against grease accumulating thereon. However, in order to remove all of the grease from the heat exchanger, additional chemicals such as for instance surfactants are often needed to dissolve and carry away Document JP2006038362 discloses a separator unit according to the preamble of claim 1.

However, the solutions presented have all been either difficult to use, require extra labor for the user or taking up large space. Thus, there is a need for an improved way of cleaning ventilation systems from contaminating and clogging particles.

### SUMMARY

An object has been to find a new technical solution that would enable restaurant, bakery and similar ventilation systems to be self-cleaning. The new technical solution is a ventilation system, which is provided with a built-in self-cleaning system. This aids the ventilation system to be able to survive in the aggressive environment that ventilation systems in for instance restaurants, bakeries and similar operations represent.

This object is achieved by the technique defined in the appended independent claims and where certain embodiments being set forth in the related dependent claims.

In a first aspect, a self-cleaning particulate separator unit for use in a ventilation system is provided. The particulate separator unit is configured to receive a flow of exhaust air containing pollutants, wherein said particulate separator unit comprises at least one conduit with an outer surface, the conduit being configured to have a first temperature and a second temperature, wherein when the conduit has the first temperature condensation and a particle layer of pollutants is formed on the outer surface of the conduit, and wherein when the conduit has the second temperature the condensation and the particle layer freezes and subsequently cracks such that the particle layer is detached from the conduit.

This is advantageous since the particulate separator unit stays clean and no aggregation of grease particles and other pollutants will clog the separator unit. Since it is a self-cleaning process, no aid from a person, or addition of any extra media or chemicals, is needed and the cleaning is performed automatically. To crack the formed layer of pollutants with freezing, results in an efficient cleaning process where no pollutant particles will remain on the surfaces in the particulate separator unit, as would be the issue if, for example the chosen method for cleaning would be to try to melt the adhered layer of pollutants off the conduits.

In one embodiment, there is provided a ventilation system, wherein the at least one conduit is arranged to receive a refrigerant which is arranged to assume a first and a second refrigerant temperature, wherein when the refrigerant assumes the first refrigerant temperature, the conduit will assume the first temperature, and when the refrigerant assumes the second refrigerant temperature, the conduit will assume the second temperature.

In one embodiment the conduit is caused to assume the second conduit temperature by causing the refrigerant to assume the second refrigerant temperature by regulating the temperature of the refrigerant.

In one embodiment the conduit is caused to assume the second conduit temperature by regulating the airflow.

In one embodiment, there is provided a self-cleaning particulate separator, wherein the second temperature is in a range between 0 to -60°C. Preferably, the second temperature is between -3 to -20°C, and more preferably between -8 to -12°C. These temperature intervals ensure that the formed ice layer cracks the layer of pollutants.

It should be noted, and as will be explained in the detailed description, that it is not the ice layer that cracks in its structure, but the ice layer cracks the particle layer thus forcing the particle layer to release its cohesion to or grip on the outer surface of the conduit.

In another embodiment, a self-cleaning particulate separator unit is provided, wherein the conduits are arranged in at least two rows of conduits, wherein the conduits of the first row of conduits are arranged to overlap the spaces between the conduits in an adjacent row of conduits. This configuration is beneficial since the arrangement forces the flow of exhaust air containing pollutants to flow between the conduits in the rows of conduits. This enhance the chances of pollutants adhering to the surface of the conduits.

In yet another embodiment, there is provided a self-cleaning particulate separator unit, wherein the conduits are arranged in at least two sections with a distance D1 between them. If pollutants and other particles, such as water molecules, does not adhere to the first section in the particulate separator unit, they might adhere to a conduits of a conduit in another section after the distance D1 in the particulate separator unit. The distance D1 between the sections also enables smaller particles to collide and form larger particles, which have a higher chance of adhering to the surfaces of the conduits in the particulate separator unit.

In another embodiment, there is provided a self-cleaning particulate separator unit, wherein the conduits are arranged in a circular, wavelike, (co)sinusoidal, or square formation. The different formations of the conduits are preferred due to different arrangements and configurations of the ventilation system.

In another embodiment, there is provided a self-cleaning particulate separator unit, wherein the conduits are straight, bent, circular, spherical, square or shaped in any other geometrical configuration enabling the hollow portion of the conduits to receive the refrigerant. Different shapes may be advantageous in different situations and environments.

In another embodiment, there is provided a self-cleaning particulate separator unit, wherein the conduits are hollow. This is favorable since the refrigerant may be located inside the conduits. The conduits are thus cooled efficiently.

In another embodiment, there is provided a self-cleaning particulate separator unit, wherein the particulate separator unit comprises a collection means configured to collect condensation, ice and pollutants. An advantage with a collection means is that condensation and ice may be recycled and reused in the system for other purposes.

In another embodiment, there is provided a self-cleaning particulate separator unit, wherein the particulate separator unit comprises a source of moisture such as a sprinkle device. If the exhaust air is dry and/or if the particulate separator unit has not been used for a long time, moisture can be added to facilitate the formation of a layer of ice. Further, if the particulate separator unit has not been used for a while it may contain dust and other particles which one would like to remove before starting cleaning the exhaust air. The sprinkle device can then be used to sprinkle the particulate separator unit clean before starting to separate pollutants and water from the exhaust air.

In a second aspect, there is provided a ventilation system comprising a self-cleaning particulate separator unit. It can be advantageous to provide a self-cleaning particulate separator unit in a ventilation system. When using the particulate separator unit, no additional pre-filtration for instance is needed in the ventilation system. As the particulate separator unit is self-cleaning, it can be included in a system without the user having to spend time and effort on difficult cleaning processes inside the ventilation system.

In one embodiment, there is provided a ventilation system, wherein the at least one conduit is arranged to receive a refrigerant which is arranged to assume a first and a second refrigerant temperature, wherein when the refrigerant assumes the first refrigerant temperature, the conduit will assume the first temperature, and when the refrigerant assumes the second refrigerant temperature, the conduit will assume the second temperature.

In one embodiment, there is provided a ventilation system, further comprising a pump configured to pump the refrigerant to the particulate separator unit and into the conduits through an inlet duct and out from the conduit through an outlet duct. This is an effective way of moving the refrigerant through the conduits.

In another embodiment, there is provided a ventilation system, wherein the collection means is connected with a chamber for storage of liquids via a pipe. This is advantageous since the collected liquids can be stored, and furthermore reused in the system when water is needed. Thus, one can firstly use the stored liquids before consuming additional tap water or water from another water source.

In another embodiment, there is provided a ventilation system further comprising a filter configured to filter the liquid to be sprinkled by the sprinkle device in order to remove pollutants. This is advantageous since the pollutants are not redistributed into the ventilation system.

In another embodiment, there is provided a ventilation system, wherein the chamber for storage of liquid is connected to the sprinkler device. This enables the simple use of the stored liquids by the sprinkler device.

In another embodiment, there is provided a ventilation system, wherein the ventilation system further comprises a heating device connected to the chamber. To have a heating device is favorable since there might be a need for heating the liquids stored in the chamber. If the contents of the chamber contains pieces of ice for instance, these can be melted by the heating device.

In a third aspect, a method for self-cleaning of a particulate separator unit is provided, wherein the method comprises the steps of causing the at least one conduit to assume a first temperature, whereby condensation and a particle layer of pollutants is formed on the outer surface of the at least one conduit, and causing the conduits to assume a second temperature, whereby the condensation and the particle layer freezes and subsequently cracks such that the particle layer is detached from the at least one conduit. This method is beneficial in that it provides for effective cleaning of the air flowing through particulate separator unit.

### BRIEF DESCRIPTION OF THE DRAWINGS

Embodiments of the invention will be described in the following, reference being made to the appended drawings, which illustrate non-limiting examples of how the inventive concept can be reduced into practice.
Fig. 1 is a schematic view of a ventilation system according to an embodiment,
Fig. 2 is a schematic front view of a particulate separator unit according to an embodiment as shown in the ventilation system in Fig. 1,
Fig. 3 is a schematic cross section of a conduit used in the particulate separator unit according to an embodiment,
Fig. 4 is a schematic top view of the fluid conduit unit in Fig. 2,
Fig. 5 is a schematic side view of the particulate separator unit in Fig. 2,
Fig. 6 is a schematic top view of the fluid conduit unit in Fig. 2 with a flow of exhaust air,
Fig. 7 is a block diagram of a filtration and cleaning method used by the particulate separator unit,
Figures 8A, 8B, 8C and 8D each show a schematic view of a conduit wall and a layer of pollutants and how they are affected according to the present invention, and
Fig. 9 is a schematic side view of an alternative arrangement of the conduits of the particulate separator unit in Fig. 2.

### DETAILED DESCRIPTION OF EMBODIMENTS

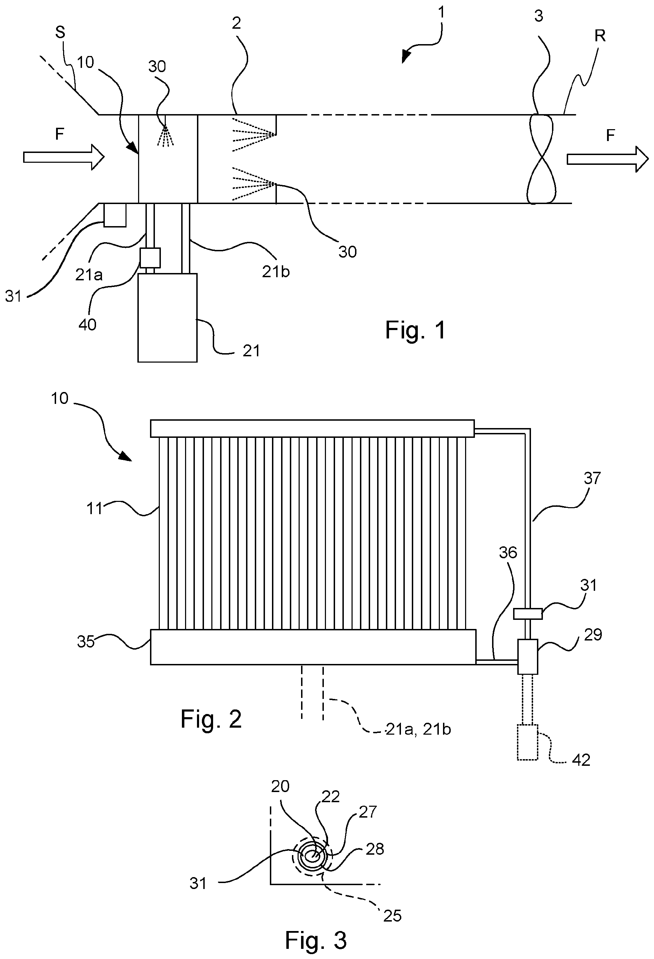

With reference to Fig. 1 a ventilation system 1 with a ventilation duct 2 and a particulate separator unit 10 arranged within the ventilation duct 2 is illustrated. The ventilation system 1 as such can be any known type of ventilation system and is not limiting the features of the particulate separator unit 10. The particulate separator unit 10 may for instance be a filter, pressure drop device or energy recycling equipment.

Advantageously, the ventilation system 1 is located in an environment where exhaust air contains pollutants such as grease, soot, dust, grime or other types of particles, which need to be effectively managed. Such an environment may for example be a large scale restaurant kitchen, a bakery or any other environment where pollutants as described are air borne.

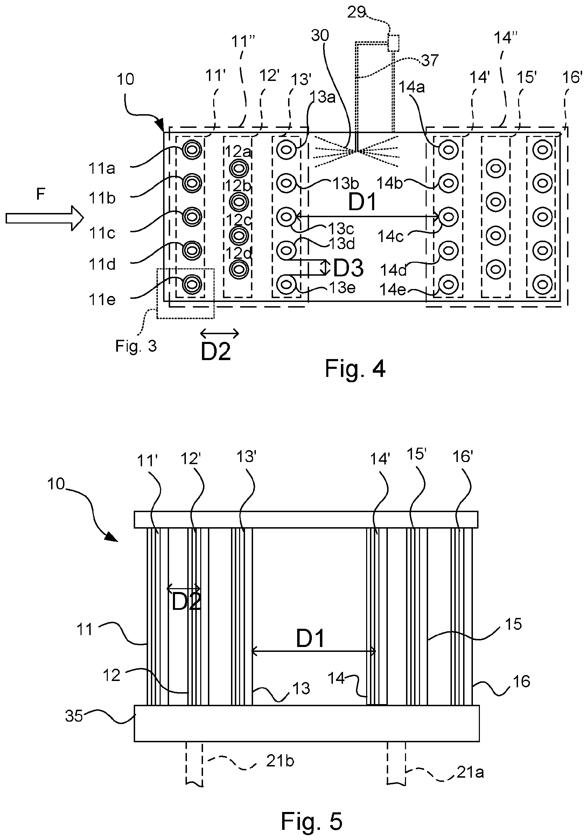

The particulate separator unit 10 is designed and arranged to receive a flow F of exhaust air containing pollutants Pa, Pb, Pb', Pc (shown in Fig. 5) flowing into the ventilation duct 2 through a first portion S of the duct, also referred to as a start end S and further on through the duct 2 of the ventilation system 1. The flow F of exhaust air is generated by a fan unit 3. The fan unit 3 is often placed in a second portion R, also referred to as a rear end R of the ventilation duct 2. The fan unit 3 can be any type of fan unit used in ventilation systems. The ventilation system 1 may also comprise one or more water distribution devices, herein referred to as sprinkle devices 30. The particle separator unit 10 is also connected to a refrigerant supply unit 21 via a first 21a and a second 21b refrigerant duct, herein referred to as an inlet duct 21a and an outlet duct 21b. The ducts 21a and 21b may further be connected to an optionally installed pump 40.

Fig. 2 discloses a side view in the flow direction F of the particulate separator unit 10. The particulate separator unit 10 may be surrounded by an outer housing (not shown) to ensure that no exhaust air from the air flow F escapes the unit 10. The particulate separator unit 10 comprises a plurality of conduits 11. The arrangement of the conduits 11 will be more thoroughly explained later on. A collection means 35, e.g. in the form of a tray 35 is arranged beneath the conduits 11. Further, a chamber 29 is connected to the collection tray 35 by means of a pipe 36. An optionally installed heating device 42 is connected to the chamber 29. The sprinkle device 30 shown in Fig. 1 and Fig. 4 is connected to the chamber 29 through a pipe 37.

Fig. 3 discloses a cross section of one conduit 11e. In this embodiment, the conduit 11e has an outer surface 28 and an inner hollow portion 22. The hollow portion 22 is filled with a refrigerant 20, such as a cooling liquid, for cooling the outer surface 28 of the conduit 11e.

With reference to Fig. 4, an embodiment with a possible arrangement of the conduits 11a-e, 12a-d, 13a-e, 14a-e in the particulate separator unit 10 is shown. The conduits 11a-e, 12a-d, 13a-e, 14a-e may be arranged in at least two rows. In Fig. 4 six conduit rows 11'-16' are shown. However, this number may vary in other embodiments. The number of rows of conduits is preferably between 2 and 15, and more preferably more than 2. The conduits 11a-e in the first row 11' of conduits are arranged to overlap the spaces between the conduits 12a-d in the second row 12' of conduits. The conduits 13-16 of the following rows 13'-16' overlap in a corresponding manner, as shown in Fig. 4.

In the exemplifying embodiment in Fig. 4, there are between four and five conduits 11-16 in each row of conduits 11'-16'. The number of conduits 11-16 in each row 11'-16' is preferably between 12 and 150 and more preferably between 38 and 75.

Fig. 4 also shows that the conduits of the first three rows 11' -13' and the conduits of the subsequent three rows 14'-16', are arranged in two spaced apart sections 11", 14". Each section 11", 14" comprises a number of rows of conduits 11', 12', 13', 14', 15', 16'. The distance D1 between the last conduit row 13' of the first section 11" and the first conduit row 14' of the second section 14" is preferably 150 mm.

In one embodiment, a distance D2 between one conduit row 11' and an adjacent conduit row 12' within the same section 11", 14" is between 20 and 100 mm. The distance between each row 11'-16' of conduits may vary between each row 11'-16' of conduits. The variation or the continuity of the distances D2 between the rows 11'-16' of conduits can be adapted to specific situations and environments. Further, a distance D3 between a first conduit 13d and an adjacent conduit 13e in the same conduit row 13' is preferably between 4 and 20 mm. The distances D3 between different conduits 11a-e, 12a-d, 13a-e may also vary.

In Fig. 5, a side view of the particulate separator unit 10 is shown. As in Fig. 2, the side view illustrates the collective tray 35, the inlet duct 21a and the outlet duct 21b and a plurality of conduits 11-16, arranged in rows of conduits 11', 12', 13', 14', 15', 16'. The distances D1 and D2 are also indicated in Fig. 2b.

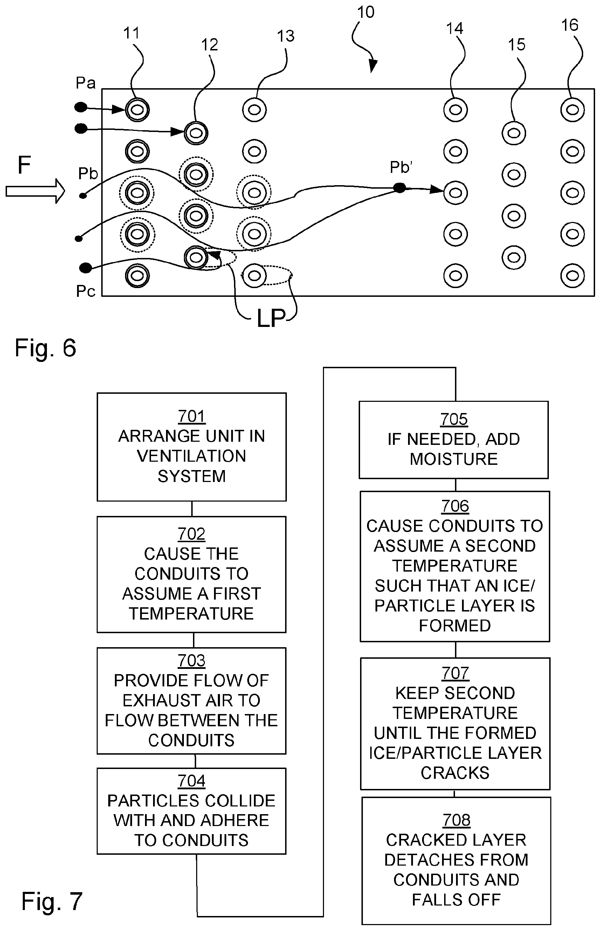

In Fig. 6, the flow of exhaust air F is indicated to move into the particulate separator unit 10 from the left hand side. The exhaust air contains pollutants Pa, Pb, Pb' and Pc. The particulate separator unit 10 comprises a plurality of conduits 11-16 as explained by the exemplary embodiment of Fig. 4.

The scheme of Fig. 7, together with Fig. 6, show how the ventilation system 1 with the particulate separator unit 10 is able to remove pollutants Pa, Pb, Pb', Pc from the exhaust air and clean itself. First, the particulate separator unit 10 is arranged 701in the ventilation system 1. In one embodiment, the conduits 11-16 of the unit 10 are then caused 702 to assume a first conduit temperature Tci, or conduit cooling temperature Tci.

In one embodiment causing the conduits to assume a first conduit temperature Tci is accomplished by circulating the refrigerant 20, having a first refrigerant temperature T_{R1}, within the refrigerant system comprising the refrigerant supply unit 21, the first and second ducts 21a, 21b the pump 40 and the conduits 11-16. Thus, the conduits 11-16 assume a temperature Tci close to the temperature T_{R1} of the refrigerant. Due to the first conduit temperature Tci, condensation will form on the outer surface 28 of the conduits 11-16.

As the refrigerant and the conduit will have temperatures that - at least after an initial period after a temperature change has been effected - are substantially the same or at least corresponds to one another due to the heat transfer between the refrigerant and the conduit, it may be said that changing the temperature of the conduit corresponds to changing the temperature of the refrigerant and vice versa.

The flow of exhaust air F is provided 703 to the unit 10 and the air flows in between or next to the conduits 11-16.

In one embodiment causing the conduits to assume a first conduit temperature Tci is accomplished by the flow of exhaust air, having a relatively high temperature, being higher than the first conduit temperature Tci, which will heat up the conduit (and also the refrigerant) and cause the conduit to assume the first conduit temperature which depends on the refrigerant temperature and the temperature in the flow of air.

Particles Pa, Pb, Pb', Pc in the exhaust air flow F will collide 704 with and adhere to the outer surfaces 28 of the conduits 11-16. A layer of pollutants 25 are thus formed on the surfaces 28.

To remove the pollutant layer 25, i.e. to clean the unit 10 by a cleaning process, the refrigerant 20 is caused to assume a second refrigerant temperature T_{R2}, or freeze temperature. The second temperature T_{R2} is lower than the first temperature T_{R1}. This causes 706 the conduits 11-16 to assume a second conduit temperature T_{C2} which corresponds substantially to the second refrigerant temperature T_{R2}.

In one embodiment the refrigerant 20 is caused to assume the second refrigerant temperature T_{R2} (and thereby will the conduit be caused to assume the second conduit temperature T_{C2}) by actively changing or regulating the temperature of the refrigerant, such as by cooling the refrigerant or by replacing the refrigerant. In such an embodiment, the refrigerant 20 is caused to assume the first refrigerant temperature T_{R1} by actively changing or regulating the temperature of the refrigerant, such as by heating the refrigerant or by replacing the refrigerant.

In one embodiment the refrigerant 20 is caused to assume the second refrigerant temperature T_{R2} by causing the conduit 11 to assume the second conduit temperature T_{C2}, thereby cooling the refrigerant, by adapting the flow of air F. As the inventors have realized, the flow of air has a heating effect on the conduits, and the flow of air can thus be used to regulate the temperature of the conduit 11 causing the conduit to assume different temperatures, possibly without changing the refrigerant in other manners, by simply adapting the flow of air.

It should be noted that tha adaptation of air may be in addition to or as an alternative to adapting or regulating the refrigerant.

In one embodiment the flow of air is adapted by reducing the flow of air.

In one embodiment the flow of air is adapted by halting the flow of air.

In one embodiment the flow of air is adapted by shunting in cool air in the flow of air. The cool air may be shunted in through a shunting valve 31 (see figure 1). The cool air may be outdoor air in which case no additional cooling will be necessary, thereby saving further on energy consumption.

In one embodiment the flow of air is adapted while circulating the refrigerant. The refrigerant will thus not be cooled as much or any longer by the flow of air, and the conduit will assume the second temperature being lower than the first temperature.

As simply adapting the flow of air, especially by reducing, halting or shunting in outside air, does not require any energy to perform, but actually reduces the power consumption, the overall power consumption of the ventilation system is reduced and the cleaning process is highly efficient and environmentally friendly.

The second cooling temperature T_{C2} (in some embodiments the second refrigerant temperature T_{R2}) is chosen in order to freeze the condensation and the layer of pollutants 25 on the surface 28 of the conduits 11-16.

The condensation thus turns 707 into a layer of ice 27 (shown in Fig. 3). It is to be noted that the conduits 11-16 are not always necessarily covered by the ice layer 27.

Only when the cleaning process is underway is the ice layer 27 forced to form on the conduits 11-16. Thus, energy is not required in order to keep the refrigerant or conduit at a temperature enough to freeze the condensation at all times. The cleaning process is conducted at regular intervals. The time span between each cleaning event depends on the environment in which the particulate separator 10 is arranged, the air flow rate etc.

If the ventilation system 1 or particulate separator unit 10 is in need of extra moisture in order to form condensation on the outer surface 28, moisture can be added in a step 705 - before causing 706 the conduits 11-16 to assume the second conduit temperature T_{C2} - by for instance sprinkling water on the conduits 11-16 with the sprinkle device 30. Alternatively, or additionally, additional moisture is added before the particles adhere to the conduits. It is favorable to switch off the ventilation system function during the self-cleaning process. However, it is not mandatory to do so.

The conduits 11-16 are kept 707 at the second temperature T_{C2} until the formed layer of ice 27 and the layer of pollutants 25 crack 708 due to the low temperatures T_{C2}, T_{R2}. In one embodiment, the conduits 11-16 are kept 707 at the second temperature T_{C2} by circulating the refrigerant while adapting the air flow F. The cracked layer of ice 27 and layer of pollutants 25 thus detach 708 from the conduits 11-16 and fall off from the conduits 11-16, at least when the conduits again assume a higher temperature, such as when the ventilation system is turned off (whereby no refrigerant is circulated to cool the conduits), when the refrigerant is caused to assume a higher temperature or when the ventilation system is again activated, whereby the flow of air will again heat the conduits.

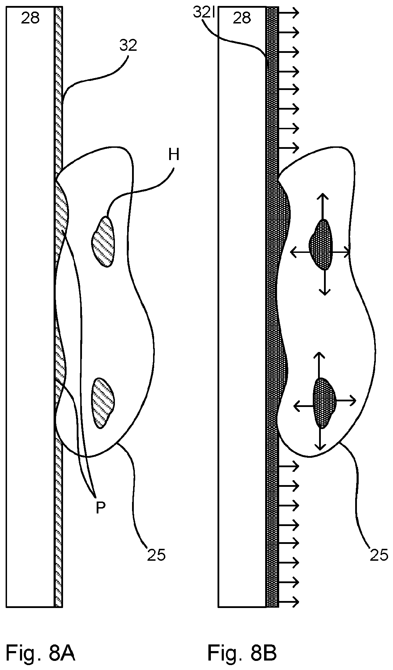

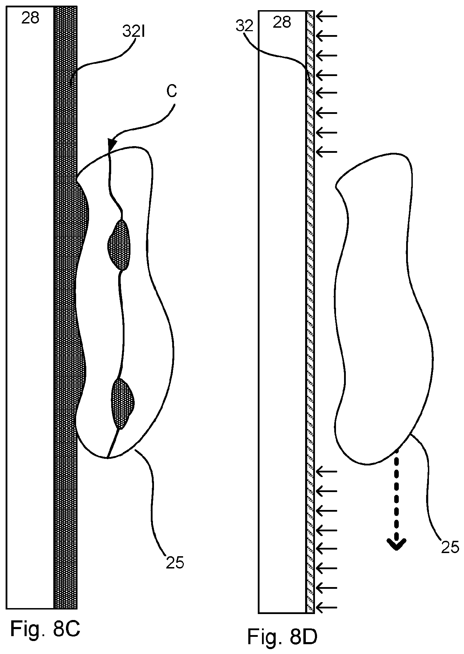

In the following the process of the cracking the ice layer and particle layer will be disclosed in more detail with reference to figure 8 being a series of schematic views of a conduit wall 28 and a layer of pollutants 25. As can be seen in figure 8A the outer surface 28 of a conduit is shown in enlargement. It should be noted that the series of figures of 8A-8D is not to scale and some proportions have been greatly exaggerated for illustrative purposes, such as the thickness of the condensation layer.

A condensation layer 32 is formed on the outer surface 28 when the conduit temperature is at the first conduit temperature (such as when the first temperature is above 0 degrees Celsius). It should be noted that the condensation layer may be formed through natural adsorption, especially when the conduit is made of metal, whereby no energy is needed for causing the condensation layer to be formed.

The condensation layer may be very thin and need not have a specific thickness. However, the thicker the condensation layer, the more time efficient the cleaning process. It should be noted though that since the cleaning process disclosed herein actually saves energy, it may be repeated many times and so a high efficiency is not necessary.

The condensation layer may also comprise fluids sprayed into the ventilation system.

As no surface is completely smooth, there will always be some pockets where condensation can be formed.

As is illustrated in figure 8A, the layer of pollutants 25 is irregular in its structure and especially its surface. There will thus be formed small pockets (P) of condensation between the layer of pollutants 25 and the outer surface 28 of the conduit. As is also illustrated in figure 8A, as the layer of pollutants is irregular and may also have been constructed in layers, possibly comprising several particles that are clumped together, there may also be holes (H) in the layer of pollutants that are filled (at least partially) with condensation or other fluids.

As is known, when liquids, especially water, freezes they expand. Figure 8B shows how the condensation layer expands as it turns into an ice layer 321. The expansion is indicated by the arrows indicating the direction of the expansion. As the outer surface 28 of the conduit is impermeable, or at least less permeable than the free air, the ice layer 321 will expand away from the outer surface 28. As it does so, the condensation in the pockets P will also expand and push the layer of pollutants 25 away from the outer surface 28, thereby cracking the ice layer 321 and the layer of pollutants 25.

Furthermore, as the layer of pollutants and the condensation layer does not consist of the same material, they will expand at different rates as they freeze, which will also cause the ice layer 321 and the layer of pollutants 25 to crack.

In addition to this, the holes H of condensation in the layer of pollutants 25 will also expand and possibly cause the layer of pollutants 25 to crack from inside forming cracks C.

Figure 8C shows the situation when the ice layer 321 has expanded and the layer of pollutants 25 has been distanced from the outer surface 28, that is, after the ice layer 321 and the layer of pollutants 25 has cracked. As the layer of pollutants 25 has been distanced from the outer surface 28 it loses- at least partially - its cohesion to or grip on the outer surface 28. Due to gravity some of the layer of pollutants 25 will fall of already at this point.

It is thus not the ice layer that cracks, but it is the combined layer of the ice layer and the layer of pollutants that cracks as is indicated in the above.

Figure 8C also shows the situation where cracks C have been formed in the layer of pollutants 25.

As is noted above, the conduits are only kept at the lower temperature for a time period, and then allowed to assume a higher temperature (above 0 degrees Celsius), such as an inactive temperature or the first temperature whereby the ice layer 321 will melt. Figure 8D shows the situation when the ice layer 321 has melted and returned to a condensation layer 32. This is indicated by the arrows. As is illustrated in figure 8D, the layer of pollutants 25 is not distanced from the outer surface 28 and also, there is no ice layer 321 to hold it to the outer surface, and most or at least some of the layer of pollutants 25 will fall off the outer surface 28, as is indicated by the bold dotted arrow.

Due to gravity, later rinsing/ spraying and/or the reintroduction of the air flow most of the layer of pollutants 25 will thus fall off the outer surface 28.

As noted above, this process is very energy efficient, and may thus be repeated regularly. In case there is a remaining layer of pollutants, as the conduits are caused to assume the first temperature again, a new or the same condensation layer will form, but now in the pockets which have been made larger and also in any holes, which have been made larger, and/or cracks and as the conduits are again caused to assume the second temperature (being below 0 degrees Celsius), the ice layer 321 will again be formed, causing the ice layer and remaining layer of pollutants 25 to crack even more, and distance the remaining layer of pollutants 25 from the outer wall 28 even further, thereby increasing the likelihood of the remaining layer of pollutants 25 to fall off the outer wall 28.

The conduits 11-16 have thus become cleaned with a self-cleaning process. Thereafter, the conduit is brought back to the first temperature or at least a temperature above 0 degrees Celsius, such as an inactive temperature. In one embodiment, this is achieved by the refrigerant 20 being brought back to the first refrigerant temperature T_{R1}. In one embodiment this is achieved by the air flow being re-adapted. Thus, also the conduits 11-16 assume the first conduit temperature Tci once more and the air cleaning process starts over again. Alternatively, the ventilation system is turned off completely whereby the conduits assume the inactive temperature, assumingly being above 0 degrees Celsius as at least parts of the ventilation system is arranged indoors.

Should the ventilation system be arranged outdoors and the ventilation system is turned off, the conduits will remain at the lower temperature until the ventilation system is turned back on and the warm air flow from the restaurant recommences. The situation can then utilize the invention by using the turned off period as the period when the conduits are kept at the lower or second temperature and then form the ice layer cracking the ice and particle layer.

To summarize, with reference to figure 7, the manner of operating the self-cleaning ventilation system according to this application, thus comprises causing the conduits to assume 702 a first temperature and to provide 703 a flow of air. The conduits are caused to assume the first temperature by a refrigerant being circulated in the conduits and by being heated by the air flow. By circulating the refrigerant at least shortly before providing the flow of air enables for a condensation layer to be formed more efficiently before the flow of air - and the accompanying particles - first contact the conduits. As it will take some time to cool the conduits, the conduits will not freeze immediately upon receiving the refrigerant. The first temperature - at least as eventually reached during filtering - is above 0 degrees Celsius.

As the air flows through the ventilation system, particles being carried by the air flow will collide and adhere 704 to the conduits. When they do, small pockets of condensation will be formed under the layer of particles, and as the conduits are caused to assume a second temperature, the condensation will freeze, possibly along with the layer of pollutants, and crack 707 the layer of pollutants causing the layer of pollutants to lose (at least some of) its adhesion to the outer wall 28 of the conduit 11. The ice layer may also crack due to the freezing. The second temperature - at least as eventually reached - is below 0 degrees Celsius. The conduits are caused to assume the second temperature by the refrigerant being circulated in the conduits being further cooled and/or by no longer being heated by the air flow - or to a reduced degree. By no longer heating the conduits, possibly by simply turning off the air flow, an energy saving manner of cooling the conduits is achieved as the manner of driving the air flow (possibly the fan) is turned off or down.

The cracked layer of pollutants, and possibly some of the ice layer, detaches 708 from the conduit, at least when the temperature is brought back to the first temperature, or another temperature, such as an inactive temperature, above 0 degrees Celsius.

The details of the particulate separator unit 10 according to one embodiment will now be described in more detail with reference to Figs 1-6. The refrigerant 20 is caused to assume the first refrigerant temperature T_{R1}. The pump 40, connected to the refrigerant supply unit 21 and the ducts 21a and 21b, pumps the refrigerant 20 with temperature T_{R1} through the inlet duct 21a and the refrigerant 20 is distributed into the hollow portions 22 of each conduit 11-16.

A preferred value of the first refrigerant temperature T_{R1} when entering the particulate separator unit 10 is between -20°C and 10°C . The refrigerant 20 is arranged to run in a closed system between the conduits 11-16 of the particulate separator unit 10, the two ducts 21a, 21b and the refrigerant supply unit 21 by means of the pump 40. The pump 40 can in other embodiments be replaced by for example a heat exchanger, a heat pump or any other suitable device.

In Figs 4 and 6, the conduits 11a-e, 12a-d, 13a-e, 14a-e have assumed the first conduit temperature Tci by heat transfer from the refrigerant 20 having the first refrigerant temperature T_{R1}. The flow of exhaust air F flows into the ventilation system 1 and into the particulate separator unit 10.In one embodiment, the conduits 11a-e, 12a-d, 13a-e, 14a-e have assumed the first conduit temperature Tci by heat transfer from the refrigerant 20 having the first refrigerant temperature T_{R1} in combination with being heated by the flow of air.

By the displacement of the rows of conduits 11'-16' in relation to each other, where the conduits of one row overlap the spaces between adjacent conduits of the adjacent row, the particulate separator unit 10 forces the exhaust air in the flow F to flow around the conduits 11a-e, 12a-d, 13a-e, 14a-e. This creates a desired turbulence in the flow of exhaust air. This will be further explained in relation to Fig. 6.

Figs 4 and 6 show how the conduits 11-16 are blocking the flow path F of the pollutants Pa, Pb, Pb', Pc in the flow F of the exhaust air. Thus, as seen in Fig. 6, the particles Pa, Pb, Pb', Pc need to flow in a non-linear manner to avoid collision with the conduits 11a-e, 12a-d, 13a-e, 14a-e. The pollutants may be of different sizes and shapes. A typical range of particle sizes for more than 95% of the sample mass of a troublesome pollutant such as grease, is from 2 µm to 25 µm.

There are three possible ways to make the pollutants Pa, Pb, Pb', Pc collide with and adhere to the outer surfaces 28 of the conduits 11a-e, 12a-d, 13a-e, 14a-e as shown in Fig. 6, which will now be further explained.

I: Particles Pa of a size which is too large (the definition of large depend on the diameter of the conduits and the distances between the conduits in each direction) to flow between the conduits 11a-e, 12a-d, 13a-e, 14a-e unhindered have a high risk of directly colliding and adhering to the outer surfaces 28 of the conduits 11a-e, 12a-d, 13a-e, 14a-e. A first way I of removing pollutants Pa from the exhaust air by the particulate separator unit 10 is thus to arrange the conduits 11a-e, 12a-d, 13a-e, 14a-e in such a manner that larger particles cannot pass between the conduits 11a-e, 12a-d, 13a-e, 14a-e unhindered.

II: Particles Pb of a smaller size, compared to the scenario in I, (the exact size depends on the diameter of the conduits and the distances between the conduits in each direction) may flow between the conduits 11a-e, 12a-d, 13a-e, 14a-e due to their size and due to the turbulent flow in the flow F. However, the distance D1, the turbulent flow and cooling of the conduits 11a-e, 12a-d, 13a-e, 14a-e by means of the refrigerant increases the chance that two or more particles Pb will collide with each other, forming larger particles Pb'. Larger particles Pb' have the same risk as the larger particles Pa to collide with and adhere to conduits further down the flow path, for instance in the second section of conduits 14" as shown in Fig. 6. Thus, a second way II of removing pollutants Pb from the exhaust air by the particulate separator unit 10 is to enable the particles Pb to collide with each other and form new larger particles Pb' which can more easily collide with a conduit 12a-d, 13a-e, 14a-e.

III: When cooling the conduits 11a-e, 12a-d, 13a-e, 14a-e with a first refrigerant temperature T_{R1} the surrounding exhaust air will also decrease in temperature. This will cause water bound in the exhaust air to condensate on the outer surfaces 28 of the conduits 1 1a-e, 12a-d, 13a-e, 14a-e and aid pollutants Pa, Pb, Pb', Pc to adhere thereon. As stated above, the condensation may also be formed naturally by adsorption.

A common temperature of the flow F of exhaust air is between 18°C and 35°C. A common value of the first refrigerant temperature T_{R1} of the refrigerant 20 is between -20°C and 10°C. The first conduit temperature Tci, which the conduits 11-16 assume when the refrigerant 20 of temperature T_{R1} passes through them, is slightly higher than the first refrigerant temperature T_{R1}. This is due to the laws of thermodynamics. The

This means that a temperature drop of the exhaust air can be achieved. As the flow of air is activated the first conduit temperature, will increase as the conduit (and the refrigerant) is heated by the flow of air. Thus, the refrigerant 20 and the arrangement of conduits 11a-e, 12a-d, 13a-e, 14a-e are configured to extract energy from the flow F of exhaust air by cooling the exhaust air by means of the refrigerant 20 having the first refrigerant temperature T_{R1}, and to simultaneously, due to the cooling of the exhaust air, capture, as explained below, the pollutants Pa, Pb, Pb', Pc which adheres to the conduits 11a-e, 12a-d, 13a-e, 14a-e.

So, a third way III of removing particles Pc from the exhaust air by the particulate separator unit 10 is to bring each conduit 11a-e, 12a-d, 13a-e, 14a-e to the first conduit temperature Tci, forming a first temperature drop between the exhaust air temperature and the first temperature Tci of the conduits 11a-e, 12a-d, 13a-e, 14a-e. The particles Pc are cooled and the attracting force of condensation affects the particles, pulling them in towards the conduits 11a-e, 12a-d, 13a-e, 14a-e.

Also, due to the flow of exhaust air F past the conduits 11a-e, 12a-d, 13a-e, 14a-e, a low pressure region LP is formed behind the conduits 11a-e, 12a-d, 13a-e, 14a-e. (The word *behind* is with respect to the direction of the flow F). An LP region is a region having a pressure lower than the surrounding areas or volumes, with a pressure that is (significantly) lower than that in the flow F. Also, due to the cooling of the conduits 11a-e, 12a-d, 13a-e, 14a-e to the first conduit temperature Tci, the likelihood of a particle being caught into the LP region increases as the particles Pc will be attracted to the lopart side of the conduits as a result of the turbulence forming as the air flows around the conduits. The three ways I, II, III of filtration are thus distinct but also cooperative and enforcing each other.

Periodically, the build-up of the particles Pa, Pb, Pb', Pc, i.e. the pollutant layer 25, and condensation on the outer surface 28 of the conduits 11a-e, 12a-d, 13a-e, 14a-e, needs to be removed. That is, the particulate separator unit needs to be cleaned. Cleaning is important in order to avoid increased resistance of the air flow and avoid the risk of clogging. Therefore, the temperature of the refrigerant 20 is decreased to the second refrigerant temperature T_{R2}. The second refrigerant temperature T_{R2} is between - 0°C and -0°C, preferably between -3 and -20°C, and more preferred between -5°C and - 15°C. The self-cleaning effect is enhanced if the second refrigerant temperature T_{R2} is applied in several cycles or for a longer duration of time. As stated above, the refrigerant may be caused to assume the second refrigerant temperature by adapting the airflow as an alternative or in addition to actively cooling the refrigerant.

Due to the first conduit temperature Tci of the conduits 11a-e, 12a-d, 13a-e, 14a-e, condensation from water bound in the exhaust air has formed on the outer surfaces 28 of the conduits 11a-e, 12a-d, 13a-e, 14a-e. When the refrigerant 20 is cooled to the second refrigerant temperature T_{R2}, the conduits 11-16 assume the second conduit temperature T_{C2}, and the condensation freezes such that a layer of ice 27 is formed on the outer surface 28 of each conduit 11a-e, 12a-d, 13a-e, 14a-e. Since the condensation forms closest to the conduit surface 28 at least a part of the pollutants adhere on top of the condensation, i.e. at least a part of the condensation is beneath the pollutant layer 25.

Eventually, the layer of ice 27 beneath the layer of pollutants 25 expands and thus cracks the pollutants 25 due to the lower second refrigerant temperature T_{R2}. The lower second refrigerant temperature T_{R2}, compared to the first refrigerant temperature T_{R1}, causes the layer of pollutants 25 to contract and become brittle, which eventually lead to a blasting or cracking effect. When the layer of ice 27 and layer of pollutants 25 crack, the layer of pollutants 25 detach from and fall off from the conduits 1 1a-e, 12a-d, 13a-e, 14a-e. The layer of pollutants 25 falls down into the collection means 35 (further explained below). In some instances, where the layer of ice has been cracked in itself, the layer of ice 27 also fall off the outer surface 28. This temperature varying process, or freeze process, achieves self-cleaning of the conduits 11a-e, 12a-d, 13a-e, 14a-e of the particulate separator unit 10 in the ventilation system 1. When the ice 27 and pollutant layer 25 has fallen off the conduits 11-16, the temperature of the refrigerant 20 is brought back to the first refrigerant temperature T_{R1} or an inactive temperature, and the process may be started again. The unit may include a controller (not shown), which controls the temperature of the refrigerant, the interval at which the cleaning takes place, and various optional features, such as alarms for when there is a need for emptying the collection means 35. The controller may e.g. control a compressor, by which the temperature changes of the refrigerant is handled.

A preferred cleaning interval, i.e. temperature change from the first refrigerant temperature T_{R1} to the second refrigerant temperature T_{R2} is once every 24 hours. However, this depends on the amount of particles/pollutants in the exhaust air.

Thus, it is efficient and simple to form a layer of ice 27 on the conduits 11a-e, 12a-d, 13a-e, 14a-e according to the present invention. The layer of ice 27 can be formed during high load cycles and the layer of pollutants 25 will fall off from the surface 28 of the conduits 11a-e, 12a-d, 13a-e, 14a-e when the layer of ice 27 cracks the layer of pollutants 25, leaving no melted grease on the surfaces 28. In addition, no further chemicals, such as a surfactant, is needed to achieve a well-functioning self-cleaning process, as needed in EP 2 149 756 B1. During use, the flow F of exhaust air is cooled by the cooled conduits 11-16 and condensation is formed on the outer surfaces 28 of the conduits 11-16. Excess condensation water formed in the particulate separator unit 10 and on the conduits 11-16 is collected by the collection means 35 and transported to the chamber 29 via the pipe 36. The chamber 29 may also be used for collecting the cracked layer of ice 27 and layer of pollutants 25 during self-cleaning of the particulate separator unit 10.

The gathered condensation water and/or layer of ice 27, can in one embodiment be recycled in the self-cleaning process of the particulate separator unit 10. Optionally, the chamber 29 is connected to the heating device 42 which is arranged to heat the ice 27 which has fallen off the conduits 11-16 sufficiently to melt the ice 27. If the heating device 42 is not used, the ice 27 will melt due to the temperature being above 0°C in the collection tray 35. The condensation water and/or the melted ice 27 can be sprinkled or sprayed on the conduits 11a-e, 12a-d, 13a-e, 14a-e in order to add extra moisture to the outer surface 28 of the conduits 1 1a-e, 12a-d, 13a-e, 14a-e. Thus, the conduits 11a-e, 12a-d, 13a-e, 14a-e can be wetted to ensure that an ice layer 27 is formed thereon to facilitate the cracking process. However, if the melted condensation water is to be recycled, a filter 31 (shown in Fig. 2) is preferably used to filter away the pollutants prior the sprinkling.

The sprinkler device 30 may further be included in either the particulate separator unit 10 and/or in the ventilation system 1. Advantageously, the sprinkler device 30 can gather water from the chamber 29. If the particulate separator unit 10 and the conduits 11-16 need to be cleaned but there is no condensation to form an ice layer 27, water may be sprinkled onto the conduits 11-16. If water from the chamber 29 is not enough, the chamber 29 can be connected to and use water from any other suitable water source (not shown), for example a tap in the room where the ventilation system 1 is in use. The sprinkler device 30 and optionally the above described heating device 42 may further be connected to any regular water source if more water is needed during cleaning. It is however an advantage to be able to use the condensation water first and then add water from another source. To recycle the condensation is an advantage since it is a sustainable use of the ventilation system 1, without the necessity to add tap water and waste resources.

The sprinkler device 30 may be of use for instance if the ventilation system 1 and/or the particulate separator unit 10 has not been in use for a long time or if the exhaust air is extraordinary dry. The relative humidity of the air alters depending on weather, climate and season for instance. When air is very dry, there is a risk that too little water is present in the air flow Fto enable the formation of an ice layer 27. This is solved by the addition of moisture by means of the sprinkler device 30.

The outlet duct 21b in the particulate separator unit 10 is arranged to receive the refrigerant 20 after it has been transported through the conduits 11a-e, 12a-d, 13a-e, 14a-e and return it to the refrigerant supply unit 21. When the refrigerant 20 has passed through the conduits 11-16 and has cooled the conduits 11-16, heat exchange has taken place between the exhaust air flow F and the cooling liquid 20 in the conduits 11-16. The refrigerant 20 in the second duct 21b, has assumed a higher temperature compared to the refrigerant 20 transported in the first duct 21a, due to the heat exchange. Thus, the refrigerant 20 is, caused to assume the first refrigerant temperature T_{R1} by any suitable device within the closed loop before returning to the particulate separator unit 10 and the conduits 11-16 through the first inlet duct 21a.

The particulate separator unit 10 as described above has many advantages. The particulate separator unit 10 both filters the exhaust air and provides a built-in self-cleaning system. In known ventilation systems these two features are often separate, using different units to accomplish both filtering and cleaning. This has not been beneficial since, for example, the amount of necessary cleaning and maintenance work that needs to be done regularly is too extensive and not as efficient as with the particulate separator unit 10 presented above. By being able to remove the cleaning member features, the efficiency of the cleaning of the ventilations system is increased and also the risk of clogging in the ventilation system causing poor air quality and foul smell is diminished.

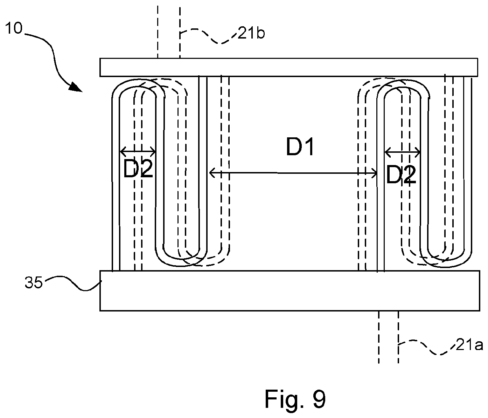

The conduits 11a-e, 12a-d, 13a-e, 14a-e have been described above as straight conduits aligned in straight rows, however, in other embodiments, they may be shaped and arranged in any other way possible to achieve that the refrigerant 20 may flow through the conduits 11-16 and so that pollutants can adhere to the outer surfaces 28 of the conduits 11-16. The conduits 11-16 may be designed to be straight, spirals, circles, wave-like, (co)sinusoidal or any other geometrical shape possible to enable the refrigerant to be transported to or through the conduits 11-16. The rows 11'-16' are in the shown embodiment adjacent rows but may in other embodiments be arranged differently. Further, the conduits 11-16 may be arranged in for instance a circle like pattern, mesh like pattern, horizontally, vertically or diagonally in relation the flow F of the exhaust air and they may be integrated in or arranged adjacent to the internal walls of the ventilation duct 2. Other possible configurations of the conduits 11-16 can be seen in Fig. 9.

In one embodiment, at least one of the conduits 11-16 is made of metal, which further improves the adsorption.

In one embodiment, at least one of the conduits 11-16 is coated to enable the pollutants to lose their adhesion more easily. In one such embodiment, the coating is nano-coating.

Although the present unit has been described above with reference to specific embodiments, it is not intended to be limited to the specific form set forth herein. Rather, the invention is limited only by the accompanying claims. If nothing else is stated, features from different embodiments can be combined.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc. do not preclude a plurality. Reference signs in the claims are provided merely as a clarifying example and shall not be construed as limiting the scope of the claims in any way.

## Claims

1. A self-cleaning particulate separator unit (10) for use in a ventilation system (1) configured to receive a flow (F) of exhaust air containing pollutants (Pa, Pb, Pb', Pc), wherein said particulate separator unit (10) comprises a controller and at least one conduit (11-16) with an outer surface (28), the conduit (11-16) being configured to receive a refrigerant (20), wherein the conduit (11) is configured to have a first temperature (T_{C1}) and a second temperature (T_{C2}), wherein when the conduit (11) has the first temperature (T_{C1}), condensation and a particle layer (25) of pollutants (Pa, Pb, Pb', Pc) is formed on the outer surface (28) of the conduit (11-16), and wherein when the conduit (11) has the second temperature (T_{C2}) the condensation freezes and subsequently cracks the particle layer (25) such that the particle layer (25) is detached from the conduit (11-16); said self-cleaning particulate separator unit being **characterized in that** the controller is configured to:
- cause (702) the at least one conduit (11-16) to assume said first temperature (T_{C1}), whereby the condensation and the particle layer (25) of pollutants (Pa, Pb, Pb', Pc) is formed on the outer surface (28) of the at least one conduit (11-16); and
- cause (706) the conduits (11-16) to assume the second temperature (T_{C2}), whereby the condensation and the particle layer (25) freezes and subsequently cracks (707) such that the particle layer (25) is detached from the at least one conduit (11-16).

2. The self-cleaning particulate separator unit according to claim 1, wherein the controller is configured to cause the refrigerant (20) to have a first refrigerant temperature (T_{R1}) and a second refrigerant temperature (T_{R2}), wherein when the refrigerant (20) has the first refrigerant temperature (T_{R1}) the conduit (11) has the first temperature (T_{C1}), and when the refrigerant (20) has the second refrigerant temperature (T_{R2}) the conduit (11) has the second temperature (T_{C2}).

3. The self-cleaning particulate separator unit according to claim 2, wherein the second refrigerant temperature (T_{R2}) is in a range between 0 to -60°C, preferably between -3 to -20°C, and more preferably between -8 to -12°C.

4. The self-cleaning particulate separator unit according to any of the preceding claims, wherein the temperature of the conduit (11) is regulated by the flow of air (F).

5. The self-cleaning particulate separator unit according to claim 4, wherein the controller is configured to regulate the temperature of the conduit (11) through the flow of air (F) by reducing the flow of air.

6. The self-cleaning particulate separator unit according to claim 4 or 5, further comprising a shunting valve (31), wherein the controller is configured to regulate the temperature of the conduit (11) is regulated by the flow of air (F) by the controller causing the shunting valve (31) to shunt in cooler air into the flow of air.

7. The self-cleaning particulate separator unit according to any of the preceding claims, wherein the conduit (11) is caused to assume the second temperature (T_{C2}) by causing the refrigerant (20) to assume the second refrigerant temperature (T_{R2}) by the controller being configured to regulate the temperature of the refrigerant.

8. The self-cleaning particulate separator unit according to any of the preceding claims, wherein the first temperature of the conduit (11) is above 0 degrees Celsius and the second temperature of the conduit (11) is below 0 degrees Celsius.

9. The self-cleaning particulate separator unit according to any of the preceding claims, wherein the controller is configured to cause the conduit (11) to first have a first temperature, then to have the second temperature, and then to have a temperature at least above 0 degrees Celsius.

10. The self-cleaning particulate separator unit according to any of the preceding claims, wherein the particulate separator unit (10) comprises a collection means (35) configured to collect condensation, ice and pollutants (Pa, Pb, Pb', Pc).

11. The self-cleaning particulate separator unit according to any of the preceding claims, wherein the particulate separator unit (10) comprises a source of moisture such as a sprinkle device (30).

12. A ventilation system comprising a self-cleaning particulate separator unit (10) according to any one of claims 1 to 11.

13. The ventilation system according to claim 12, further comprising a pump (40) configured to pump the refrigerant (20) to the particulate separator unit (10) and into the conduits (11-16) through an inlet duct (21a) and out from the conduit (11-16) through an outlet duct (21b).

14. The ventilation system according to claim 12 or 13 and comprising a self-cleaning particulate separator unit (10) according to claim 11, wherein the collection means (35) is connected with a chamber (29) for storage of liquids via a pipe (37) and wherein the ventilation system further comprises a filter (31) configured to filter the liquid to be sprinkled by the sprinkle device (30) in order to remove pollutants (Pa, Pb, Pb', Pc), wherein the chamber (29) for storage of liquid is connected to the sprinkler device (30), wherein the ventilation system (1) further comprises a heating device (42) connected to the chamber (29).

15. A method for self-cleaning of a particulate separator unit (10) according to any of claims 1-11 wherein the method comprises the steps of:
- causing (702) the at least one conduit (11-16) to assume a first temperature (T_{C1}), whereby condensation and a particle layer (25) of pollutants (Pa, Pb, Pb', Pc) is formed on the outer surface (28) of the at least one conduit (11-16); and
- causing (706) the conduits (11-16) to assume a second temperature (T_{C2}), whereby the condensation and the particle layer (25) freezes and subsequently cracks (707) such that the particle layer (25) is detached from the at least one conduit (11-16).

## Patentansprüche

1. Selbstreinigende Partikelabscheidereinheit (10) zur Verwendung in einem Lüftungssystem (1), die konfiguriert ist, um einen Strom (F) von Abluft aufzunehmen, der Schadstoffe (Pa, Pb, Pb', Pc) enthält, wobei die Partikelabscheidereinheit (10) eine Steuereinheit und mindestens eine Leitung (11-16) mit einer Außenoberfläche (28) umfasst, wobei die Leitung (11-16) konfiguriert ist, um ein Kältemittel (20) aufzunehmen, wobei die Leitung (11) konfiguriert ist, um eine erste Temperatur (T_{C1}) und eine zweite Temperatur (T_{C2}) aufzuweisen, wobei, wenn die Leitung (11) die erste Temperatur (T_{C1}) aufweist, Kondensation und eine Partikelschicht (25) von Schadstoffen (Pa, Pb, Pb', Pc) auf der Außenoberfläche (28) der Leitung (11-16) gebildet werden und wobei, wenn die Leitung (11) die zweite Temperatur (T_{C2}) aufweist, die Kondensation die Partikelschicht (25) einfriert und anschließend bricht, sodass die Partikelschicht (25) von der Leitung (11-16) gelöst wird, wobei die selbstreinigende Partikelabscheideeinheit **dadurch gekennzeichnet ist, dass** die Steuereinheit konfiguriert ist zum:
- Bewirken (702), dass die mindestens eine Leitung (11-16) die erste Temperatur (T_{C1}) annimmt, wodurch die Kondensation und die Partikelschicht (25) von Schadstoffen (Pa, Pb, Pb', Pc) auf der Außenoberfläche (28) der mindestens einen Leitung (11-16) gebildet werden; und
- Bewirken (706), dass die Leitungen (11-16) die zweite Temperatur (T_{C2}) annehmen, wodurch die Kondensation und die Partikelschicht (25) gefrieren und die Partikelschicht anschließend bricht (707) aufweisen, sodass die Partikelschicht (25) von der mindestens einen Leitung (11-16) gelöst wird.

2. Selbstreinigende Partikelabscheidereinheit nach Anspruch 1, wobei die Steuereinheit konfiguriert ist, um zu bewirken, dass das Kältemittel (20) eine erste Kältemitteltemperatur (T_{R1}) und eine zweite Kältemitteltemperatur (T_{R2}), aufweist, wobei, wenn das Kältemittel (20) die erste Kältemitteltemperatur (T_{R1}) aufweist, die Leitung (11) die erste Temperatur (T_{C1}) aufweist, und wenn das Kältemittel (20) die zweite Kältemitteltemperatur (T_{R2}) aufweist, die Leitung (11) die zweite Temperatur (T_{C2}) aufweist.

3. Selbstreinigende Partikelabscheidereinheit nach Anspruch 2, wobei die zweite Kältemitteltemperatur (T_{R2}) in einem Bereich zwischen 0 und -60 °C, vorzugsweise zwischen -3 und -20 °C und mehr bevorzugt zwischen -8 und -12 °C liegt.

4. Selbstreinigende Partikelabscheidereinheit nach einem der vorstehenden Ansprüche, wobei die Temperatur der Leitung (11) durch den Luftstrom (F) reguliert wird.

5. Selbstreinigende Partikelabscheidereinheit nach Anspruch 4, wobei die Steuereinheit konfiguriert ist, um die Temperatur der Leitung (11) über den Luftstrom (F) durch Reduzieren des Luftstroms zu regulieren.

6. Selbstreinigende Partikelabscheidereinheit nach Anspruch 4 oder 5, ferner umfassend ein Überbrückungsventil (31), wobei die Steuereinheit konfiguriert ist, um die Temperatur der Leitung (11) durch den Luftstrom (F) zu regulieren, indem die Steuereinheit bewirkt, dass das Überbrückungsventil (31) bei kühlerer Luft in den Luftstrom überbrückt.

7. Selbstreinigende Partikelabscheidereinheit nach einem der vorstehenden Ansprüche, wobei bewirkt wird, dass die Leitung (11) die zweite Temperatur (T_{C2}) annimmt, indem bewirkt wird, dass das Kältemittel (20) die zweite Kältemitteltemperatur (T_{R2}) annimmt, indem die Steuereinheit konfiguriert ist, um die Temperatur des Kältemittels zu regulieren.

8. Selbstreinigende Partikelabscheidereinheit nach einem der vorstehenden Ansprüche, wobei die erste Temperatur der Leitung (11) über 0 Grad Celsius liegt und die zweite Temperatur der Leitung (11) unter 0 Grad Celsius liegt.

9. Selbstreinigende Partikelabscheidereinheit nach einem der vorstehenden Ansprüche, wobei die Steuereinheit konfiguriert ist, um zu bewirken, dass die Leitung (11) zuerst eine erste Temperatur aufweist, dann die zweite Temperatur aufweist und dann eine Temperatur mindestens über 0 Grad Celsius aufweist.

10. Selbstreinigende Partikelabscheidereinheit nach einem der vorstehenden Ansprüche, wobei die Partikelabscheidereinheit (10) ein Sammelmittel (35) umfasst, das konfiguriert ist, um Kondensation, Eis und Schadstoffe (Pa, Pb, Pb', Pc) zu sammeln.

11. Selbstreinigende Partikelabscheidereinheit nach einem der vorstehenden Ansprüche, wobei die Partikelabscheidereinheit (10) eine Feuchtigkeitsquelle wie z. B. eine Berieselungsvorrichtung (30) umfasst.

12. Lüftungssystem, umfassend eine selbstreinigende Partikelabscheidereinheit (10) nach einem der Ansprüche 1 bis 11.

13. Lüftungssystem nach Anspruch 12, ferner umfassend eine Pumpe (40), die konfiguriert ist, um das Kältemittel (20) zu der Partikelabscheidereinheit (10) und in die Leitungen (11-16) durch einen Einlasskanal (21a) und aus der Leitung (11-16) durch einen Auslasskanal (21b) zu pumpen.

14. Lüftungssystem nach Anspruch 12 oder 13 und umfassend eine selbstreinigende Partikelabscheidereinheit (10) nach Anspruch 11, wobei das Sammelmittel (35) mit einer Kammer (29) zur Lagerung von Flüssigkeiten über ein Rohr (37) verbunden ist und wobei das Lüftungssystem ferner einen Filter (31) umfasst, der konfiguriert ist, um die durch die Berieselungsvorrichtung (30) zu berieselnde Flüssigkeit zu filtern, um Schadstoffe (Pa, Pb, Pb', Pc) zu entfernen, wobei die Kammer (29) zur Speicherung von Flüssigkeit mit der Berieselungsvorrichtung (30) verbunden ist, wobei das Lüftungssystem (1) ferner eine Heizvorrichtung (42) umfasst, die mit der Kammer (29) verbunden ist.

15. Verfahren zum Selbstreinigen einer Partikelabscheidereinheit (10) nach einem der Ansprüche 1- 11, wobei das Verfahren die folgenden Schritte umfasst:
- Bewirken (702), dass die mindestens eine Leitung (11-16) eine erste Temperatur (T_{C1}) annimmt, wodurch Kondensation und eine Partikelschicht (25) von Schadstoffen (Pa, Pb, Pb', Pc) auf der Außenoberfläche (28) der mindestens einen Leitung (11-16) gebildet werden; und
- Bewirken (706), dass die Leitungen (11-16) eine zweite Temperatur (T_{C2}) annehmen, wodurch die Kondensation und die Partikelschicht (25) gefrieren und die Partikelschicht anschließend bricht (707) aufweisen, sodass die Partikelschicht (25) von der mindestens einen Leitung (11-16) gelöst wird.

## Revendications

1. Unité de séparation particulaire autonettoyante (10) pour utilisation dans un système de ventilation (1) configuré pour recevoir un écoulement (F) d'air d'échappement contenant des polluants (Pa, Pb, Pb', Pc), dans laquelle ladite unité de séparation particulaire (10) comprend un dispositif de commande et au moins un conduit (11-16) avec une surface externe (28), le conduit (11-16) étant configuré pour recevoir un réfrigérant (20), dans laquelle le conduit (11) est configuré pour avoir une première température (T_{C1}) et une deuxième température (T_{C2}), dans laquelle lorsque le conduit (11) a la première température (T_{C1}), de la condensation et une couche particulaire (25) de polluants (Pa, Pb, Pb', Pc) sont formées sur la surface externe (28) du conduit (11-16), et dans laquelle lorsque le conduit (11) a la deuxième température (T_{C2}) la condensation gèle et fissure ensuite la couche particulaire (25) de sorte que la couche particulaire (25) est détachée du conduit (11-16) ; ladite unité de séparation particulaire autonettoyante étant **caractérisée en ce que** le dispositif de commande est configuré pour :
- amener (702) l'au moins un conduit (11-16) à prendre ladite première température (T_{C1}), moyennant quoi la condensation et la couche particulaire (25) de polluants (Pa, Pb, Pb', Pc) sont formées sur la surface externe (28) de l'au moins un conduit (11-16) ; et
- amener (706) les conduits (11-16) à prendre la deuxième température (T_{C2}), moyennant quoi la condensation et la couche particulaire (25) gèlent et se fissurent ensuite (707) de sorte que la couche particulaire (25) est détachée de l'au moins un conduit (11-16).

2. Unité de séparation particulaire autonettoyante selon la revendication 1, dans laquelle
le dispositif de commande est configuré pour amener le réfrigérant (20) à avoir une première température de réfrigérant (T_{R1}) et une deuxième température de réfrigérant (T_{R2}), dans laquelle lorsque le réfrigérant (20) a la première température de réfrigérant (T_{R1}) le conduit (11) a la première température (T_{C1}), et lorsque le réfrigérant (20) a la deuxième température de réfrigérant (T_{R2}) le conduit (11) a la deuxième température (T_{C2}).

3. Unité de séparation particulaire autonettoyante selon la revendication 2, dans laquelle
la deuxième température de réfrigérant (T_{R2}) est dans une plage entre 0 et -60 °C, de préférence entre -3 et -20 °C, et plus préférablement entre -8 et -12 °C.

4. Unité de séparation particulaire autonettoyante selon l'une quelconque des
revendications précédentes, dans laquelle la température du conduit (11) est régulée par l'écoulement d'air (F).

5. Unité de séparation particulaire autonettoyante selon la revendication 4, dans laquelle
le dispositif de commande est configuré pour réguler la température du conduit (11) à travers l'écoulement d'air (F) en réduisant l'écoulement d'air.

6. Unité de séparation particulaire autonettoyante selon la revendication 4 ou 5,
comprenant en outre une vanne de dérivation (31), dans laquelle le dispositif de commande est configuré pour réguler la température du conduit (11) est régulée par l'écoulement d'air (F) par le dispositif de commande amenant la vanne de dérivation (31) à dériver dans un refroidisseur de l'air dans l'écoulement d'air.

7. Unité de séparation particulaire autonettoyante selon l'une quelconque des
revendications précédentes, dans laquelle le conduit (11) est amené à prendre la deuxième température (T_{C2}) en amenant le réfrigérant (20) à prendre la deuxième température de réfrigérant (T_{R2}) par le dispositif de commande étant configuré pour réguler la température du réfrigérant.

8. Unité de séparation particulaire autonettoyante selon l'une quelconque des revendications précédentes, dans laquelle la première température du conduit (11) est supérieure à 0 degré Celsius et la deuxième température du conduit (11) est inférieure à 0 degré Celsius.

9. Unité de séparation particulaire autonettoyante selon l'une quelconque des revendications précédentes, dans laquelle le dispositif de commande est configuré pour amener le conduit (11) à avoir d'abord une première température, puis à avoir la deuxième température, puis à avoir une température au moins supérieure à 0 degré Celsius.

10. Unité de séparation particulaire autonettoyante selon l'une quelconque des revendications précédentes, dans laquelle l'unité de séparation particulaire (10) comprend un moyen de recueil (35) configuré pour recueillir de la condensation, de la glace et des polluants (Pa, Pb, Pb', Pc).

11. Unité de séparation particulaire autonettoyante selon l'une quelconque des revendications précédentes, dans laquelle l'unité de séparation particulaire (10) comprend une source d'humidité telle qu'un dispositif d'aspersion (30).

12. Système de ventilation comprenant une unité de séparation particulaire autonettoyante (10) selon l'une quelconque des revendications 1 à 11.

13. Système de ventilation selon la revendication 12, comprenant en outre une pompe (40) configurée pour pomper le réfrigérant (20) vers l'unité de séparation particulaire (10) et dans les conduits (11-16) par l'intermédiaire d'une conduite d'entrée (21a) et hors du conduit (11-16) par l'intermédiaire d'une conduite de sortie (21b).

14. Système de ventilation selon la revendication 12 ou 13 et comprenant une unité de séparation particulaire autonettoyante (10) selon la revendication 11, dans lequel le moyen de recueil (35) est connecté à une chambre (29) pour le stockage de liquides via un tuyau (37) et dans lequel le système de ventilation comprend en outre un filtre (31) configuré pour filtrer le liquide à asperger par le dispositif d'aspersion (30) afin d'enlever des polluants (Pa, Pb, Pb', Pc), dans lequel la chambre (29) pour le stockage de liquide est connectée au dispositif d'aspersion (30), dans lequel le système de ventilation (1) comprend en outre un dispositif de chauffage (42) connecté à la chambre (29).

15. Procédé d'autonettoyage d'une unité de séparation particulaire (10) selon l'une quelconque des revendications 1 à 11 dans lequel le procédé comprend les étapes consistant à :
- amener (702) l'au moins un conduit (11-16) à prendre une première température (T_{C1}), moyennant quoi de la condensation et une couche particulaire (25) de polluants (Pa, Pb, Pb', Pc) sont formées sur la surface externe (28) de l'au moins un conduit (11-16) ; et
- amener (706) les conduits (11-16) à prendre une deuxième température (T_{C2}), moyennant quoi la condensation et la couche particulaire (25) gèlent et se fissurent ensuite (707) de sorte que la couche particulaire (25) est détachée de l'au moins un conduit (11-16).
